# EUROPÄISCHE PATENTSCHRIFT

(11) **EP 2 040 961 B1**
(45) Veröffentlichungstag und Bekanntmachung des Hinweises auf die Patenterteilung: **15.09.2010**
(21) Anmeldenummer: 07765179.2
(22) Anmeldetag: 11.07.2007
(51) Int. Cl.: B60T 8/17, B60T 8/32, B60T 13/68

(54) **ELEKTRONISCHES BREMSSYSTEM OHNE DRUCKSENSOREN IN RADMODULEN UND VERFAHREN ZUR BREMSDRUCKSTEUERUNG**
ELECTRONIC BRAKE SYSTEM WITHOUT PRESSURE SENSORS IN WHEEL MODULES, AND METHOD FOR CONTROLLING THE BRAKE PRESSURE
SYSTÈME DE FREINAGE ÉLECTRONIQUE SANS DÉTECTEURS DE PRESSION DANS DES MODULES DE ROUES, ET PROCÉDÉ DE COMMANDE DE LA PRESSION DE FREINAGE

(30) Priorität: 11.07.2006 DE 102006032064
(43) Veröffentlichungstag der Anmeldung: 01.04.2009
(73) Patentinhaber: KNORR-BREMSE Systeme für Nutzfahrzeuge GmbH, 80809 München (DE)
(72) Erfinder: WERNER, Frank, 71254 Ditzingen (DE)
(74) Vertreter: Schönmann, Kurt
(86) Internationale Anmeldenummer: PCT/EP2007/006161
(87) Internationale Veröffentlichungsnummer: WO 2008/006568

(56) Entgegenhaltungen:
- EP-A- 0 433 858
- EP-A- 0 754 609
- DE-A1- 3 133 102

## Beschreibung

Die Erfindung betrifft elektronische Bremssysteme für Fahrzeuge, und bezieht sich insbesondere auf die drucksensorlose Steuerung des Bremsdrucks in Radmodulen elektronischer Bremssysteme.

Bekannte elektronische Bremssysteme (EBS), wie sie beispielsweise in Nutzfahrzeugen und Anhängern für dieselben Verwendung finden, setzen auf herkömmlichen Druckluft-Bremsanlagen, etwa Fremdkraft-Zweileitungs-Druckluft-Bremsanlagen, auf und steuern diese elektronisch an, um das Betriebsverhalten der pneumatisch arbeitenden Betriebs-Bremsanlage, welche vorwiegend auch ein Anti-Blockiersystem (ABS) und gegebenenfalls eine Antriebsschlupfregelung (ASR) umfasst, zu verbessern und bekannte Nachteile der Druckluft-Bremsanlage, wie beispielsweise lange Strömungszeiten für Druckaufbau und Druckabbau, lange Reaktionszeiten des Bremssystems und unzureichende Nutzung des Kraftschlußbeiwerts, zu verringern.

Die EP 0 754 609 A2 offenbart ein Verfahren zur Steuerung des Bremsdrucks in einem elektronischen Bremssystem für ein ein Antiblockiersystem einschließendes Druckluft-Bremssystem in einem Nutzfahrzeug beinhaltend die Schritte (a) bis (c) von Patentanspruch 1.

In elektronischen Bremssystemen werden unter anderem Drehzahlsensoren und Lastsensoren, welche notwendige Betriebsparameter erfassen, sowie Druckregelmodule, Betriebsbremsventile mit elektrischem Bremswertgeber und elektronische Steuergeräte eingesetzt, die auf der Grundlage der erfassten Betriebsparameter eine geeignete Regelung der Bremsanlage für sowohl einen regulären Bremsvorgang als auch einen ABS-Bremsvorgang durchführen. Es wird angemerkt, dass Lastsensoren nicht zwingend erforderlich sind, da alternativ die Masse auch geschätzt werden kann.

Eine Ausweitung der EBS-Funktionalität auf Anhänger ist über bekannte Bussysteme, beispielsweise den Controller Area Network (CAN)-Bus, und Anhänger-Steuermodule möglich.

Bei einem Bremsvorgang in einem solchen elektronischen Bremssystem wird üblicherweise mittels einer von einem Fahrer des Nutzfahrzeugs durch Betätigen eines Bremspedals vorgegebenen Wunschverzögerung, dem Fahrerwunsch, ein Soll-Bremsdruck für jeden von verfügbaren Kanälen der Bremsanlage in Abhängigkeit von der Beladung und der Achslastverteilung berechnet und sodann der tatsächliche Bremsdruck jedes Kanals mittels einem Druckregler ausgeregelt.

Eine solche Ausregelung erfolgt mit Hilfe von Radmodulen der Bremsanlage, beispielsweise in elektro-pneumatischen Bremsmodulen (elektro-pneumatische Module, EPM) und Anhänger-Steuermodulen (Trailer Control Module, TCM), die sich ortsnah an jedem Rad befinden und von einem elektronischen Steuergerät angesteuert werden, wobei in den Radmodulen Drucksensoren zur Erfassung des ausgeregelten Bremsdrucks in dem entsprechenden Kanal und zur Rückmeldung desselben an den Druckregler erforderlich sind, welcher sodann aufgrund des zurückgemeldeten Signals Korrekturen an dem ausgeregelten Druck vornimmt.

Die herkömmliche Auslegung als Bremsdruckregelung führt jedoch aufgrund der erforderlichen Drucksensoren an jedem Rad zu einem hohen technischen Aufwand und dadurch zu hohen Kosten bereits in bekannten elektronischen Bremssystemen, so dass eine Verringerung dieser Kosten unmittelbar und insbesondere im Hinblick auf zukünftige elektronische Bremssysteme wünschenswert ist. Ferner hat eine Regelung aufgrund des vorstehend erwähnten Aufwands eine gewisse Fehleranfälligkeit, die insbesondere bei schweren Nutzfahrzeugen oder Fahrzeugen, die zur Personenbeförderung dienen, im Hinblick auf die weiter zunehmende Verkehrsdichte einer Verbesserung bedarf. Eine Verringerung des technischen Aufwands würde im übrigen eine weiter gehende Annäherung, oder Integration, von Antiblockiersystem und elektronischem Bremssystem und damit eine weitere Kostensenkung ermöglichen.

Der Erfindung liegt daher die Aufgabe zugrunde, ein elektronisches Bremssystem dahin gehend zu verbessern, dass es ohne Drucksensoren in den Radmodulen darstellbar ist, eine höhere Sicherheit gegenüber Fehlern aufweist, und zu geringeren Kosten herstellbar ist.

Erfindungsgemäß wird diese Aufgabe durch ein Verfahren gemäß Patentanspruch 1 und ein elektronisches Bremssystem gemäß den Patentansprüchen 18 und 20 gelöst.

Vorteilhafte Weiterbildungen der Erfindung sind Gegenstand der beigefügten Unteransprüche.

Somit wird die Aufgabe der Erfindung gelöst durch ein Verfahren zur Steuerung des Bremsdrucks in einem elektronischen Bremssystem für ein zumindest teilweise drucksensorloses, ein Antiblockiersystem einschließendes Druckluft-Bremssystem in einem Nutzfahrzeug, gekennzeichnet durch die Schritte: (a) Erfassen eines Verzögerungswunschs des Fahrers des Nutzfahrzeugs; (b) Berechnen eines Gesamtdrucks für eine Vorder- und eine Hinterachse des Nutzfahrzeugs; (c) Berechnen einer Druckverteilung für die Vorderachse und die Hinterachse; (d) Berechnen von Öffnungszeiten von Radbremsventilen; (e) Aussteuern des Bremsdrucks durch Takten von Einlass- und Auslassventilen der Radbremsventile; (f) Ermitteln und Vergleichen des Radschlupfs an der Vorderachse und an der Hinterachse; und (g) Ausführen der Schritte (e) und (f), bis in Schritt (f) Gleichheit des Radschlupfs an der Vorderachse und an der Hinterachse ermittelt wird.

Danach werden zum Abschluss eines Bremsvorgangs vorzugsweise die Schritte: (h) Ermitteln der tatsächlich erzielten Verzögerung und Vergleichen derselben mit einer Soll-Verzögerung; und (i) Ausführen der Schritte (a) bis (g), bis in Schritt (h) Gleichheit der tatsächlich erzielten Verzögerung und der Soll-Verzögerung ermittelt wird, durchgeführt.

Während des Ablaufs des Verfahrens erfolgt in Schritt (f) die Ermittlung des Radschlupfs vorzugsweise in Intervallen von etwa 10 ms.

Ein Vorteil des Verfahrens besteht darin, dass die Steuerung des Bremsdrucks für sowohl das Nutzfahrzeug als auch einen Anhänger des Nutzfahrzeugs durchgeführt wird, falls sowohl das Zugfahrzeug als auch der Anhänger ein elektronisches Bremssystem aufweisen, oder dass die Steuerung des Bremsdrucks nur für das Nutzfahrzeug und eine drucksensorbasierte Regelung des Bremsdrucks für einen Anhänger des Nutzfahrzeugs durchgeführt wird, falls das Nutzfahrzeug ein elektronisches Bremssystem aufweist und der Anhänger ein solches nicht aufweist.

In einer vorteilhaften Abwandlung des Verfahrens wird die Steuerung des Bremsdrucks an Achsen des Nutzfahrzeugs und/oder eines Anhängers desselben durchgeführt, welche drucksensorlos sind, und wird an Achsen des Nutzfahrzeugs, an welchen Drucksensoren bereitgestellt sind, eine Bremsdruckregelung durchgeführt, oder wird die Steuerung des Bremsdrucks an Rädern des Nutzfahrzeugs und/oder eines Anhängers desselben durchgeführt, welche drucksensorlos sind, und wird an Rädern des Nutzfahrzeugs, an welchen Drucksensoren bereitgestellt sind, eine Bremsdruckregelung durchgeführt.

Im vorangehenden Fall wird vorzugsweise die Regelung des Bremsdrucks an drucksensorbehafteten Achsen oder Rädern des Nutzfahrzeugs oder des Anhängers derart vorrangig vor der Steuerung des Bremsdrucks durchgeführt, dass die Achsen oder Räder ohne Drucksensoren den Achsen oder Rädern mit Drucksensoren nachgeführt werden.

Vorzugsweise wird ferner die Berechung eines Gesamtdrucks für eine Vorder- und eine Hinterachse des Nutzfahrzeugs in Schritt (b) in Übereinstimmung mit dem Verzögerungswunsch des Fahrers und erfassten Werten von Masse und Beladung des Nutzfahrzeugs sowie unter Kenntnis der Bremsanlage des Nutzfahrzeugs, welche Kenntnis einen Bremsfaktor, eine Bremszylindergröße, eine Bremsengröße, Information über Bremsleitungen und dergleichen umfasst, durchgeführt, wird die Berechnung einer Druckverteilung für die Vorderachse und die Hinterachse in Schritt (c) in Übereinstimmung mit einer Schlupfberechnung des Antiblockiersystems oder eines anderen, diese Funktion übernehmenden Programmteils, für die Vorderachse und die Hinterachse durchgeführt, und erfolgt das Aussteuern des Bremsdrucks in Schritt (e) durch Takten von Einlass- und Auslassventilen der Radbremsventile.

Im letztgenannten Fall erfolgt zweckmäßig in Schritt (e) die Taktung der Einlass- und der Auslassventile der Radbremsventile in Intervallen in einem Bereich von Millisekunden, der vorteilhaft zwischen 50 ms und 100 ms liegt, und wird weiter bevorzugt in Schritt (e) die Taktung der Einlass- und der Auslassventile der Radbremsventile mittels einer Kombination von längeren und kürzeren Taktzeiten in Abhängigkeit von noch verbleibenden erforderlichen Druckänderungen durchgeführt. Hierdurch ist es vorteilhaft möglich, die Taktzeiten der Einlass- und der Auslassventile an unterschiedliche Werte von Volumina und Durchfluss der Druckluft anzupassen.

In einer vorteilhaften Modifikation des Verfahrens kann in Schritt (e) die Taktung der Radbremsventile in Übereinstimmung mit in einem elektronischen Steuergerät hinterlegten Kennlinien erfolgen.

Vorzugsweise wird die Berechnung und die Steuerung des Bremsdrucks für jeden von Kanälen des Druckluft-Bremssystems durchgeführt, und wird in diesem Zusammenhang die Berechnung der Öffnungszeiten der Radbremsventile in Schritt (d) auf der Grundlage eines bekannten Vorratsdrucks des Druckluft-Bremssystems zur Erzielung der in Schritt (c) berechneten Druckverteilung für jeden von Kanälen des Bremssystems durchgeführt.

Die vorgenannte Aufgabe wird auch gelöst durch ein elektronisches Bremssystem für ein zumindest teilweise drucksensorloses, ein Antiblockiersystem einschließendes Druckluft-Bremssystem in einem Nutzfahrzeug zur Verwendung mit dem Verfahren nach einem der vorangehenden Ansprüche, das zumindest teilweise drucksensorlose Radmodule aufweist und einen Bremsdruck an den drucksensorlosen Radmodulen auf der Grundlage eines von dem Antiblockiersystem ermittelten Radschlupfs einsteuert.

Vorzugsweise wird ein solches elektronisches Bremssystem durch ein elektronisches Steuergerät dargestellt, mit einem elektronischen-Bremsmodul zur Regelung des Bremsdrucks an Radmodulen mit Drucksensoren und Steuerung des Bremsdrucks an Radmodulen ohne Drucksensoren des Nutzfahrzeugs und einem Anhänger-Steuermodul zur Regelung des Bremsdrucks an Radmodulen mit Drucksensoren und Steuerung des Bremsdrucks an Radmodulen ohne Drucksensoren eines Anhängers des Nutzfahrzeugs.

Im übrigen umfasst ein solches elektronisches Bremssystem für ein zumindest teilweise drucksensorloses, ein Antiblockiersystem einschließendes Druckluft-Bremssystem in einem Nutzfahrzeug jeweils entsprechende Einrichtungen zur Durchführung der Schritte des oben angegebenen Verfahrens.

Die Erfindung wird nachstehend anhand bevorzugter Ausführungsbeispiele unter Bezugnahme auf die Zeichnung näher beschrieben. Es zeigen:
Fig. 1 ein Ablaufdiagramm eines Bremsvorgangs mittels einer bekannten Bremsdruckregelung mit Drucksensoren in Radmodulen einer Druckluft-Bremsanlage; und
Fig. 2 ein Ablaufdiagramm eines Bremsvorgangs mittels einer Bremsdrucksteuerung gemäß einem bevorzugten Ausführungsbeispiel unter Entfall der Drucksensoren in den Radmodulen der Druckluft-Bremsanlage.

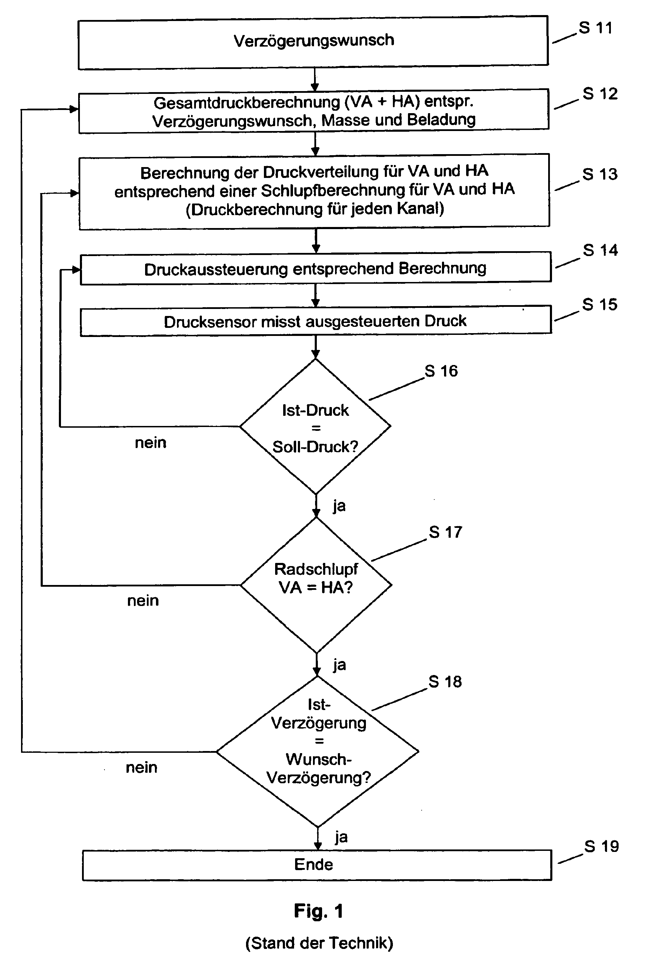

Fig. 1 bezieht sich auf einen Bremsvorgang, wie er in an sich bekannten und daher nicht näher beschriebenen Fremdkraft-Zweileitungs-Druckluft-Bremsanlagen in Zugfahrzeugen ohne Anhängerbetrieb unter Verwendung eines bekannten elektronischen Bremssystems mit Drucksensoren in Radmodulen der Bremsanlage durchgeführt wird.

In Fig. 1 erzeugt in einem Schritt S11 der Fahrer eines Fahrzeugs mit einer solchen Bremsanlage durch Betätigen eines Bremspedals einen Verzögerungswunsch (Fahrerwunsch).

Ein elektronisches Steuergerät des elektronischen Bremssystems berechnet in einem Schritt S12 sodann einen Gesamtdruck an Vorderachse (VA) und Hinterachse (HA) des Zugfahrzeugs in Übereinstimmung mit dem Verzögerungswunsch des Fahrers und erfassten Werten von Masse und Beladung des Fahrzeugs, und in einem Schritt S13 eine Druckverteilung für die Vorderachse und die Hinterachse entsprechend einem sensorisch erfassten Schlupf und einer nachfolgenden Schlupfberechnung für jeweils diese Achsen und für jeden verfügbaren Kanal der Bremsanlage.

In einem Schritt S14 steuert sodann ein Druckregler des elektronischen Bremssystems den Bremsdruck entsprechend der in Schritt S13 berechneten Druckverteilung an einzelnen Radmodulen aus, und in einem Schritt S15 wird der ausgesteuerte Druck von einem Drucksensor in einzelnen Radmodulen erfasst und an den Druckregler zurückgemeldet.

In Schritt S16 wird, beispielsweise in einem Steuergerät des elektronischen Bremssystems, der durch den Drucksensor erfasste Ist-Druck mit dem Soll-Druck verglichen. Sind diese beiden Drücke nicht gleich, kehrt der Ablauf zu Schritt S14 zurück, in welchem der Druckregler den Bremsdruck erneut aussteuert, d.h. korrigiert. Diese Abfolge von Schritten ist dem Betriebsbremssystem des Nutzfahrzeugs zugeordnet.

Ist in Schritt S16 der Ist-Druck gleich dem Soll-Druck, schreitet der Ablauf zu einem Schritt S17 fort, in dem die erfassten Werte für den Radschlupf an der Vorderachse und an der Hinterachse verglichen werden. Ist der Radschlupf an Vorderachse und Hinterachse verschieden, kehrt der Ablauf zu Schritt S13 zurück, wird die Druckverteilung für Vorder- und Hinterachse und für jeden Kanal erneut berechnet, und werden in den Schritten S14 bis S16 die Drücke in den Radmodulen erneut ausgesteuert, wie vorstehend beschrieben wurde. Es wird angemerkt, dass die Schleife über die Schritte S17 und S13 von dem Antiblockiersystem des Nutzfahrzeugs verarbeitet wird.

Es wird angemerkt, dass die Verarbeitung der Schleife über die Schritte S17 und S13 nicht zwingend durch das Antiblockiersystem erfolgen muss, sondern alternativ von einem Softwaremodul bzw. Programmteil ISC (Intelligent Slip Control) ausgeführt werden kann, wobei auch in diesem Fall die Signale der Sensoren des Antiblockiersystems verwendet werden.

Ist der Radschlupf an der Vorderachse gleich dem Radschlupf an der Hinterachse, schreitet der Ablauf zu einem Schritt S18 fort, in dem die erzielte Ist-Verzögerung mit der von dem Fahrer vorgegebenen Wunschverzögerung verglichen wird. Ist die erzielte Verzögerung nicht gleich der vorgegebenen Verzögerung, kehrt der Ablauf zu Schritt S12 zurück und wird der gesamte Druckregelungsablauf gemäß den Schritten S12 bis S17 wie vorstehend beschrieben erneut durchgeführt.

Ergibt hingegen der Vergleich in Schritt S18, dass die Ist-Verzögerung des Fahrzeugs gleich der Wunsch-Verzögerung des Fahrers ist, schreitet der Ablauf zu einem Schritt S19 fort, in welchem die Druckregelung für den gegenwärtigen Bremsvorgang, d.h. den gegenwärtigen Verzögerungswunsch des Fahrers, beendet wird.

Obwohl die Bremsdruckregelung gemäß Fig. 1 relativ kurz umrissen werden kann, ist deren technische Umsetzung in dem ein herkömmliches Druckluft-Bremssystem ansteuernden elektronischen Bremssystem mechanisch aufwendig und verarbeitungsintensiv, da einerseits teure Drucksensoren an jedem zu bremsenden Rad erforderlich sind, und sich andererseits die Druckregelung in den Schritten S14 bis S16 der Figur 1 mit der Funktion des Antiblockiersystems überlagert und so zu einem erhöhten Verarbeitungsaufwand führt.

Mit anderen Worten können die von dem ohnehin vorhandenen Antiblockiersystem erfassten Signale und durchgeführten Berechnungs- und Verarbeitungsschritte auch zur Aussteuerung des Bremsdrucks in den Radmodulen herangezogen werden, so dass die Aussteuerung des Bremsdrucks nicht mehr auf von Drucksensoren erfassten Drücken, sondern auf von dem Antiblockiersystem erfassten Radschlupfen beruht.

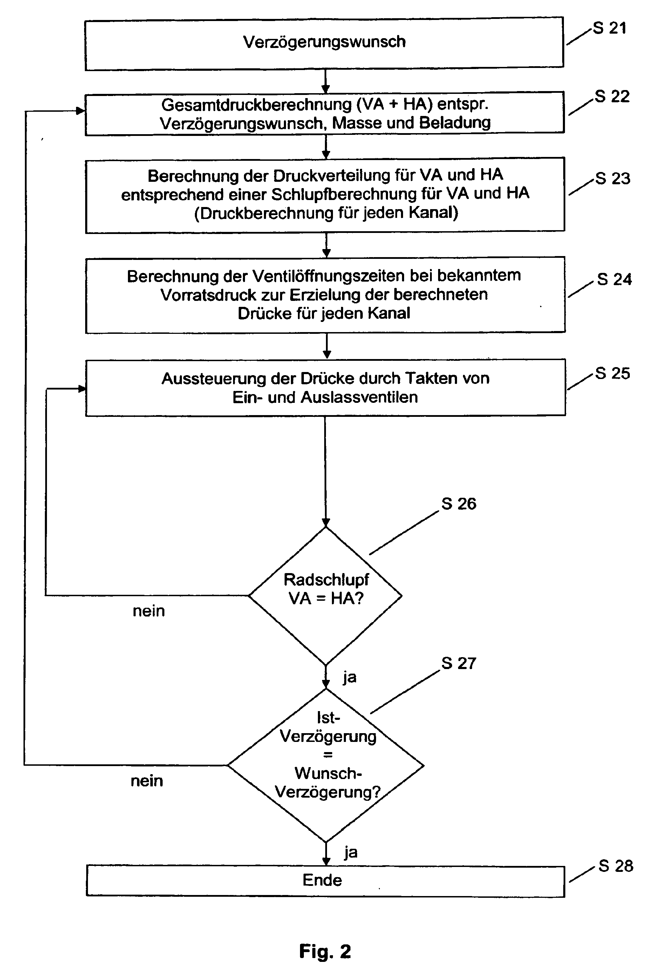

Unter Bezugnahme auf Fig. 2 wird ein bevorzugtes Ausführungsbeispiel eines dem Vorstehenden entsprechenden Ablaufs in einem solchen System beschrieben. Wesentlich hierbei ist, dass die Drucksensoren in den Radmodulen bzw. den Druckregelmodulen der elektropneumatischen Bremsmodule (EPM) und, bei ebenfalls mit einem elektronischen Bremssystem ausgerüsteten Anhängern, der Anhängersteuermodule (TCM) entfallen. Es wird somit die bisherige (aufwendige) Druckregelung durch eine vergleichsweise einfachere und kostengünstiger darzustellende Drucksteuerung unter Berücksichtigung der erfassten Radschlupfe verwirklicht.

Prinzipiell ist bei Verwendung der Drucksteuerung bei bekanntem Vorratsdruck in den einzelnen Bremskreisen, beispielsweise einem ersten und einem zweiten Bremskreis in der Fremdkraft-Zweileitungs-Druckluft-Bremsanlage, über Einlass- oder Auslass-Ventiltaktzeiten von Bremsluftventilen der in den Radmodulen bzw. Kanälen erforderliche Druck einstellbar.

Bei kleinen Drücken und Druckänderungen erfolgt dies hierbei vorzugsweise mit kürzeren Taktzeiten, wodurch ein fein abgestuftes Ansprechen der Betriebsbremse ermöglicht wird, bei großen Drücken und Druckänderungen hingegen mit entsprechend längeren Taktzeiten, um einen schnelleren Druckaufbau oder Druckabbau zu erzielen. Eine Kombination längerer und kürzerer Taktzeiten in Abhängigkeit von noch verbleibenden erforderlichen Druckänderungen ist darüber hinaus vorteilhaft.

Die nach wie vor vorhandenen Regelkreise des elektronischen Bremssystems/Antiblockiersystems für Verzögerung und Schlupfregelung (Schritte S26, S27 und Rückmeldezweige in Fig. 2) werden nun dazu verwendet, die Drücke entsprechend der geforderten Verzögerung und der erfassten Beladung des Fahrzeugs in die Bremszylinder einzusteuern.

Hierbei ist die Schlupfregelung der Verzögerungsregelung vorgeschaltet und überwacht bei einer Erhöhung oder Verringerung der Drücke in den einzelnen Kanälen, dass alle Räder des Fahrzeugs dasselbe Schlupfniveau haben.

Hat eines der Räder zuviel Schlupf, wird an diesem der Druck verringert, d.h. dieses Rad stärker abgebremst. Hat eines der Räder hingegen zuwenig Schlupf, d.h. wird es zu stark abgebremst, wird der Druck erhöht und somit die erzielte Bremswirkung an diesem Rad verringert. Es wird angemerkt, dass die Schlupfregelung so ausgelegt ist, dass das Gesamtdruckniveau immer erhalten bleibt.

Erst dann, wenn der Schlupf an den einzelnen Rädern hinreichend ausgesteuert ist, wird in die Verzögerungsregelung eingetreten, welche die Gesamtverzögerung des Fahrzeugs einschließlich eines gegebenenfalls vorhandenen Anhängers überwacht.

Weicht die Gesamtverzögerung von der Wunsch-Verzögerung des Fahrers nach unten ab, d.h. ist die Ist-Verzögerung kleiner als die Wunsch-Verzögerung, wird das Gesamtdruckniveau an Vorderachse und Hinterachse erhöht, so dass ein höherer Druck eingesteuert und dadurch die Bremswirkung erhöht werden kann. Weicht die Gesamtverzögerung dagegen von der Wunsch-Verzögerung des Fahrers nach oben ab, wird das Gesamtdruckniveau an Vorder- und Hinterachse so lange verringert, bis die Ist-Verzögerung mit der Wunsch-Verzögerung übereinstimmt.

Im Einzelnen erfolgt die grundlegende Berechnung der erforderlichen Bremsdrücke für jeden Kanal der Druckregelmodule und die Vergleiche der Radschlupfe an Vorder- und Hinterachse sowie der Ist- und Wunsch-Verzögerungswerte in Schritten S21 bis S23, S26 und S27 nach Fig. 2 wie in den Schritten S11 bis S13, S17 und S18 gemäß Fig. 1. Eine erneute Beschreibung gleicher Schritte und entsprechender Sachverhalte wird daher weggelassen.

Anders als bei der bekannten Anordnung erfolgt jedoch gemäß dem vorliegenden Ausführungsbeispiel in einem Schritt S24 bei bekanntem Vorratsdruck eine Berechnung der Öffnungszeiten von Bremsventilen zur Erzielung der in dem vorangehenden Schritt S23 berechneten Drücke für jeden Kanal, und werden in einem Schritt S25 durch Takten entsprechender Ein- und Auslassventile die berechneten Drücke ausgesteuert, da eine bestimmte Öffnungszeit der Ein- und Auslassventile bei bekanntem Vorratsdruck zu einer entsprechend bestimmten Druckänderung pro Zeiteinheit führt.

Es wird angemerkt, dass bei bekannter Bremsanlage und Masse bzw. Beladung, d.h. beispielsweise bekannte(m)(n) Bremszylindern, Bremsleitungen, Bremsfaktor und dergleichen, ein bestimmter Druck zu einer bestimmten Verzögerung führt, in der Praxis daher ein Kennlinienfeld resultiert. Alternativ zu der vorstehend beschriebenen Vorgehensweise kann dieses programmiert oder gelernt werden, und kann auf dieser Grundlage ein erster Gesamtdruck bestimmt werden, welcher entsprechend den Radschlupfen verteilt wird.

In Schritt S26 wird sodann wie in Schritt S17 nach Fig. 1 ein Vergleich der Radschlupfe an der Vorder- und an der Hinterachse durchgeführt, kehrt bei Ungleichheit der Radschlupfe der Ablauf zu Schritt S25 zurück, um in einem erneuten Druckberechnungs- und Druckaussteuervorgang die Druckaussteuerung zur Erzielung einer Radschlupfgleichheit zu korrigieren, und schreitet bei Gleichheit der Radschlupfe der Ablauf zu Schritt S27 fort, in welchem in die aus Fig. 1 bekannte Verzögerungsregelung eingetreten wird, und bei Gleichheit von Ist-Verzögerung und Wunsch-Verzögerung der Ablauf in Schritt S28 beendet wird.

Mit anderen Worten werden Erfassungssignale, wie sie beispielsweise von den ohnehin vorhandenen Sensoren, beispielsweise den Drehzahlsensoren, des Antiblockiersystems geliefert werden, zur Berechnung optimaler Ventilöffnungszeiten und damit zur Einsteuerung entsprechender Drücke, bei welchen die Radschlupfe an der Vorderachse und an der Hinterachse gleich sind, herangezogen, wodurch die Drucksensoren in den Radmodulen zur Rückmeldung des ausgesteuerten Drucks an den Druckregler entfallen können und das elektronische Bremssystem insgesamt vereinfacht und stärker dem Antiblockiersystem angenähert bzw. dieses besser genutzt werden kann.

Es wird angemerkt, dass eine Neuberechnung der Druckverteilung in Schritt S23 der Fig. 2 in diesem Ausführungsbeispiel nicht erforderlich ist, da die Druckaussteuerung mittels einer geeignet vorgegebenen Taktung oder unter Verwendung von im elektronischen Steuergerät geeignet hinterlegten Kennlinien für Belüftung und Entlüftung der einzelnen Bremsventile erfolgt.

Beispielsweise ist der Radschlupf an einem Rad über das Antiblockiersystem in Intervallen von etwa 10 ms erfassbar, und wird in der Druckaussteuerung eine Taktung der Bremsventile im Bereich von Millisekunden, beispielsweise von 50 ms oder 100 ms, vorgegeben. Vorwiegend sind hierbei Intervalle im Bereich von Millisekunden zweckmäßig, da die tatsächlich vorzugebende Taktung von den Volumina und dem Durchfluss der Druckluft an dieser Stelle abhängig ist. Die Schleife über die Schritte S25, S26 in Fig. 2 wird sodann so lange durchlaufen, d.h. die Bremsventile werden getaktet (belüftet/ entlüftet), der Radschlupf wird erfasst, die Bremsventile werden erneut getaktet usw., bis der Radschlupf an der Vorderachse und an der Hinterachse gleich ist. Es muss bei dieser Vorgehensweise lediglich im Antiblockiersystem oder in einem Softwaremodul bzw. Programmteil ISC (Intelligent Slip Control) entschieden werden, welches der einzelnen Räder zu beschleunigen oder zu verzögern ist, und welche der Bremsventile in Übereinstimmung mit dieser Entscheidung anzusteuern sind.

Darüber hinaus ist bei einem Anhängerbetrieb des Fahrzeugs auch eine Einbeziehung von ebenfalls mit dem elektronischen Bremssystem ausgerüsteten Anhängern möglich, da in diesem Fall die Radgeschwindigkeiten der Räder des Anhängers und damit deren Schlupf relativ zu den Rädern des Zugfahrzeugs bestimmt werden kann.

In diesem Fall ist ein Anhänger-CAN-Bus bereitgestellt, und werden die am Anhänger erfassten Radschlupfe über diesen Bus an ein Anhänger-Steuermodul (Trailer Control Module, TCM), das Teil des elektronischen Bremssystems in der Zugmaschine ist, übermittelt und in Antwort hierauf die Radmodule des Anhängers wie diejenigen der Zugmaschine angesteuert.

Es wird angemerkt, dass Anhänger, welche kein elektronisches Bremssystem und lediglich ein Antiblockiersystem aufweisen, für das Anhänger-Steuermodul jedoch nach wie vor zumindest ein Drucksensor am Anhänger benötigt wird, und in dem Teilsystem Anhänger-Steuermodul des elektronischen Bremssystems diese konventionelle Funktionalität durch entsprechende Steuer- bzw. Regelroutinen zusätzlich bereitgestellt wird. Das heißt, dass dann, wenn das elektronische Bremssystem im Zugfahrzeug ein elektronisches Bremssystem und das Fehlen von Drucksensoren im Anhänger erfasst, steuert das Anhänger-Steuermodul den Bremsdruck gemäß dem in Fig. 2 gezeigten Ablauf aus, wohingegen bei Nichterfassen eines elektronischen Bremssystems im Anhänger die konventionelle Druckregelung gemäß dem in Fig. 1 gezeigten Ablauf ausgeführt wird. Somit ist gewährleistet, dass an Zugfahrzeugen mit elektronischem Bremssystem weiterhin auch Anhänger ohne elektronisches Bremssystem ankoppelbar sind und eine Kompatibilität zu dem konventionellen System bereitgestellt wird.

Natürlich kann eine bekannte Belagverschleißregelung nach wie vor überlagert werden, und benötigen ein Antiblockiersystem, eine Antischlupfregelung, eine dynamische Traktionssteuerung und ein elektronisches Stabilitätsprogramm für ihre Funktion keine Drucksensoren.

In einer Modifikation des vorstehenden Ausführungsbeispiels sind Drucksensoren in den Radmodulen nur an einer der Achsen des Zugfahrzeugs oder des Anhängers vorgesehen, wohingegen die weitere Achse oder weiteren Achsen ausschließlich über die Schlupfregelung nach Fig. 2 nachgeführt werden. In diesem Fall weist das elektronische Bremssystem sowohl die Funktionalität gemäß Fig. 1 als auch diejenige gemäß Fig. 2 auf, wird eine entsprechende Anordnung in Zugfahrzeug und Anhänger beispielsweise über den CAN-Bus an das elektronische Steuergerät bzw. das Zugfahrzeug-Steuermodul und das Anhänger-Steuermodul in diesem signalisiert, und steuert bzw. regelt das elektronische Steuergerät jeweils unterschiedlich für Kanäle mit Drucksensoren und Kanäle ohne Drucksensoren.

Vorstehend wurde somit ein Verfahren zur Steuerung des Bremsdrucks in einem elektronischen Bremssystem für ein zumindest teilweise drucksensorloses, ein Antiblockiersystem einschließendes Druckluft-Bremssystem in einem Nutzfahrzeug beschrieben, mit den Schritten: (a) Erfassen eines Verzögerungswunschs des Fahrers des Nutzfahrzeugs; (b) Berechnen eines Gesamtdrucks für eine Vorder- und eine Hinterachse des Nutzfahrzeugs; (c) Berechnung einer Druckverteilung für die Vorderachse und die Hinterachse; (d) Berechnen von Öffnungszeiten von Radbremsventilen; (e) Aussteuern des Bremsdrucks; (f) Ermitteln und Vergleichen des Radschlupfs an der Vorderachse und an der Hinterachse; und (g) Ausführen der Schritte (e) und (f), bis in Schritt (f) Gleichheit des Radschlupfs an der Vorderachse und an der Hinterachse ermittelt wird. Das Verfahren findet insbesondere Verwendung in einem elektronischen Bremssystem für ein zumindest teilweise drucksensorloses, ein Antiblockiersystem einschließendes Druckluft-Bremssystem in einem Nutzfahrzeug, welches zumindest teilweise drucksensorlose Radmodule aufweist und einen Bremsdruck an den drucksensorlosen Radmodulen auf der Grundlage eines von dem Antiblockiersystem ermittelten Radschlupfs einsteuert.

## Patentansprüche

1. Verfahren zur Steuerung des Bremsdrucks in einem elektronischen Bremssystem für ein ein Antiblockiersystem einschließendes Druckluft-Bremssystem in einem Nutzfahrzeug, **gekennzeichnet durch** die Schritte:
(a) Erfassen eines Verzögerungswunschs des Fahrers des Nutzfahrzeugs (S21);
(b) Berechnen eines Gesamtdrucks für eine Vorder- und eine Hinterachse des Nutzfahrzeugs (S22);
(c) Berechnen einer Druckverteilung für die Vorderachse und die Hinterachse (S23);
(d) Berechnen von Öffnungszeiten von Radbremsventilen (S24);
(e) Aussteuern des Bremsdrucks **durch** Takten von Einlass- und Auslassventilen der Radbremsventile (S25);
(f) Ermitteln und Vergleichen des Radschlupfs an der Vorderachse und an der Hinterachse (S26); und
(g) Ausführen der Schritte (e) und (f), bis in Schritt (f) Gleichheit des Radschlupfs an der Vorderachse und an der Hinterachse ermittelt wird.

2. Verfahren nach Anspruch 1, **gekennzeichnet durch** die Schritte:
(h) Ermitteln der tatsächlich erzielten Verzögerung und Vergleichen derselben mit einer Soll-Verzögerung; und
(i) Ausführen der Schritte (a) bis (g), bis in Schritt (h) Gleichheit der tatsächlich erzielten Verzögerung und der Soll-Verzögerung ermittelt wird.

3. Verfahren nach Anspruch 1, **dadurch gekennzeichnet, dass** in Schritt (f) die Ermittlung des Radschlupfs in Intervallen von etwa 10 ms erfolgt.

4. Verfahren nach Anspruch 1, **dadurch gekennzeichnet, dass** die Steuerung des Bremsdrucks für sowohl das Nutzfahrzeug als auch einen Anhänger des Nutzfahrzeugs durchgeführt wird, falls sowohl das Zugfahrzeug als auch der Anhänger ein elektronisches Bremssystem aufweisen.

5. Verfahren nach Anspruch 1, **dadurch gekennzeichnet, dass** die Steuerung des Bremsdrucks nur für das Nutzfahrzeug und eine drucksensorbasierte Regelung des Bremsdrucks für einen Anhänger des Nutzfahrzeugs durchgeführt wird, falls das Nutzfahrzeug ein elektronisches Bremssystem aufweist und der Anhänger ein solches nicht aufweist.

6. Verfahren nach Anspruch 1, **dadurch gekennzeichnet, dass** die Steuerung des Bremsdrucks an Achsen des Nutzfahrzeugs und/oder eines Anhängers desselben durchgeführt wird, welche drucksensorlos sind, und an Achsen des Nutzfahrzeugs, an welchen Drucksensoren bereitgestellt sind, eine Bremsdruckregelung durchgeführt wird.

7. Verfahren nach Anspruch 1, **dadurch gekennzeichnet, dass** die Steuerung des Bremsdrucks an Rädern des Nutzfahrzeugs und/oder eines Anhängers desselben durchgeführt wird, welche drucksensorlos sind, und an Rädern des Nutzfahrzeugs, an welchen Drucksensoren bereitgestellt sind, eine Bremsdruckregelung durchgeführt wird.

8. Verfahren nach einem der Ansprüche 6 oder 7, **dadurch gekennzeichnet, dass** die Regelung des Bremsdrucks an drucksensorlosen Achsen oder Rädern des Nutzfahrzeugs oder des Anhängers derart vorrangig vor der Steuerung des Bremsdrucks durchgeführt wird, dass die Achsen oder Räder ohne Drucksensoren den Achsen oder Rädern mit Drucksensoren nachgeführt werden.

9. Verfahren nach Anspruch 1, **dadurch gekennzeichnet, dass** die Berechung eines Gesamtdrucks für eine Vorder- und eine Hinterachse des Nutzfahrzeugs in Schritt (b) in Übereinstimmung mit dem Verzögerungswunsch des Fahrers und erfassten Werten von Masse und Beladung des Nutzfahrzeugs sowie unter Kenntnis der Bremsanlage des Nutzfahrzeugs, welche Kenntnis einen Bremsfaktor, eine Bremszylindergröße, eine Bremsengröße, Information über Bremsleitungen und dergleichen umfasst, durchgeführt wird.

10. Verfahren nach Anspruch 1, **dadurch gekennzeichnet, dass** die Berechnung einer Druckverteilung für die Vorderachse und die Hinterachse in Schritt (c) in Übereinstimmung mit einer Schlupfberechnung des Antiblockiersystems oder eines anderen, diese Funktion übernehmenden Programmteils für die Vorderachse und die Hinterachse durchgeführt wird.

11. Verfahren nach Anspruch 1, **dadurch gekennzeichnet, dass** das Aussteuern des Bremsdrucks in Schritt (e) durch Takten von Einlass- und Auslassventilen der Radbremsventile erfolgt.

12. Verfahren nach Anspruch 11, **dadurch gekennzeichnet, dass** in Schritt (e) die Taktung der Einlass- und der Auslassventile der Radbremsventile in Intervallen im Bereich von Millisekunden erfolgt.

13. Verfahren nach Anspruch 12, **dadurch gekennzeichnet, dass** die Intervalle im Bereich zwischen 50 ms und 100 ms liegen.

14. Verfahren nach Anspruch 11 oder 12, **dadurch gekennzeichnet, dass** in Schritt (e) die Taktung der Einlass- und der Auslassventile der Radbremsventile mittels einer Kombination von längeren und kürzeren Taktzeiten in Abhängigkeit von noch verbleibenden erforderlichen Druckänderungen durchgeführt wird.

15. Verfahren nach Anspruch 1, **dadurch gekennzeichnet, dass** in Schritt (e) die Taktung der Radbremsventile in Übereinstimmung mit in einem elektronischen Steuergerät hinterlegten und/oder gelernten Kennlinien erfolgt.

16. Verfahren nach Anspruch 1, **dadurch gekennzeichnet, dass** die Berechnung und die Steuerung des Bremsdrucks für jeden von Kanälen des Druckluft-Bremssystems durchgeführt wird.

17. Verfahren nach Anspruch 1, **dadurch gekennzeichnet, dass** die Berechnung der Öffnungszeiten der Radbremsventile in Schritt (d) auf der Grundlage eines bekannten Vorratsdrucks des Druckluft-Bremssystems zur Erzielung der in Schritt (c) berechneten Druckverteilung für jeden von Kanälen des Bremssystems durchgeführt wird.

18. Verfahren nach einem der vorangehenden Ansprüche, **dadurch gekennzeichnet, dass** es zumindest teilweise drucksensorlose Radmodule aufweist und einen Bremsdruck an den drucksensorlosen Radmodulen auf der Grundlage eines von dem Antiblockiersystem ermittelten Radschlupfs einsteuert.

19. Verfahren nach Anspruch 18, **gekennzeichnet durch** ein elektronisches Steuergerät mit einem elektronischen Bremsmodul zur Regelung des Bremsdrucks an Radmodulen mit Drucksensoren und Steuerung des Bremsdrucks an Radmodulen ohne Drucksensoren des Nutzfahrzeugs und einem Anhänger-Steuermodul zur Regelung des Bremsdrucks an Radmodulen mit Drucksensoren und Steuerung des Bremsdrucks an Radmodulen ohne Drucksensoren eines Anhängers des Nutzfahrzeugs.

20. Elektronisches Bremssystem für ein zumindest teilweise drucksensorloses, ein Antiblockiersystem einschließendes Druckluft-Bremssystem in einem Nutzfahrzeug, **gekennzeichnet durch**:
- eine Einrichtung zum Erfassen eines Verzögerungswunschs des Fahrers des Nutzfahrzeugs;
- eine Einrichtung zum Berechnen eines Gesamtdrucks für eine Vorder- und eine Hinterachse des Nutzfahrzeugs;
- eine Einrichtung zum Berechnung einer Druckverteilung für die Vorderachse und die Hinterachse;
- eine Einrichtung zum Berechnung von Öffnungszeiten von Radbremsventilen;
- eine Einrichtung zum Aussteuern des Bremsdrucks;
- eine Einrichtung zum Ermitteln und Vergleichen des Radschlupfs an der Vorderachse und an der Hinterachse; und
- eine Einrichtung zum Aussteuern des Bremsdrucks, Ermitteln und Vergleichen des Radschlupfs an der Vorderachse und an der Hinterachse, bis Gleichheit des Radschlupfs an der Vorderachse und an der Hinterachse ermittelt wird.

21. Elektronisches Bremssystem nach Anspruch 20, **gekennzeichnet durch**:
- eine Einrichtung zum Ermitteln der tatsächlich erzielten Verzögerung und Vergleichen derselben mit einer Soll-Verzögerung; und
- eine Einrichtung zum Ermitteln der Gleichheit der tatsächlich erzielten Verzögerung und der Soll-Verzögerung ermittelt wird.

22. Elektronisches Bremssystem nach Anspruch 20, **dadurch gekennzeichnet, dass** die Ermittlung des Radschlupfs in Intervallen von etwa 10 ms erfolgt.

23. Elektronisches Bremssystem nach Anspruch 20, **dadurch gekennzeichnet, dass** die Steuerung des Bremsdrucks für sowohl das Nutzfahrzeug als auch einen Anhänger des Nutzfahrzeugs durchgeführt wird, falls sowohl das Zugfahrzeug als auch der Anhänger ein elektronisches Bremssystem aufweisen.

24. Elektronisches Bremssystem nach Anspruch 20, **dadurch gekennzeichnet, dass** die zumindest teilweise drucksensorlose Steuerung des Bremsdrucks nur für das Nutzfahrzeug und eine drucksensorbasierte Regelung des Bremsdrucks für einen Anhänger des Nutzfahrzeugs durchgeführt wird, falls das Nutzfahrzeug ein elektronisches Bremssystem aufweist und der Anhänger ein solches nicht aufweist.

25. Elektronisches Bremssystem nach Anspruch 20, **dadurch gekennzeichnet, dass** die Steuerung des Bremsdrucks an Achsen des Nutzfahrzeugs und/oder eines Anhängers desselben durchgeführt wird, welche drucksensorlos sind, und an Achsen des Nutzfahrzeugs, an welchen Drucksensoren bereitgestellt sind, eine Bremsdruckregelung durchgeführt wird.

26. Elektronisches Bremssystem nach Anspruch 20, **dadurch gekennzeichnet, dass** die Steuerung des Bremsdrucks an Rädern des Nutzfahrzeugs und/oder eines Anhängers desselben durchgeführt wird, welche drucksensorlos sind, und an Rädern des Nutzfahrzeugs, an welchen Drucksensoren bereitgestellt sind, eine Bremsdruckregelung durchgeführt wird.

27. Elektronisches Bremssystem nach einem der Ansprüche 25 oder 26, **dadurch gekennzeichnet, dass** die Regelung des Bremsdrucks an drucksensorlosen Achsen oder Rädern des Nutzfahrzeugs oder des Anhängers derart vorrangig vor der Steuerung des Bremsdrucks durchgeführt wird, dass die Achsen oder Räder ohne Drucksensoren den Achsen oder Rädern mit Drucksensoren nachgeführt werden.

28. Elektronisches Bremssystem nach Anspruch 20, **dadurch gekennzeichnet, dass** die Berechung eines Gesamtdrucks für eine Vorder- und eine Hinterachse des Nutzfahrzeugs in Übereinstimmung mit dem Verzögerungswunsch des Fahrers und erfassten Werten von Masse und Beladung des Nutzfahrzeugs sowie unter Kenntnis der Bremsanlage des Nutzfahrzeugs, welche Kenntnis einen Bremsfaktor, eine Bremszylindergröße, eine Bremsengröße, Information über Bremsleitungen und dergleichen umfasst, durchgeführt wird.

29. Elektronisches Bremssystem nach Anspruch 20, **dadurch gekennzeichnet, dass** die Berechnung einer Druckverteilung für die Vorderachse und die Hinterachse in Übereinstimmung mit einer Schlupfberechnung des Antiblockiersystems oder eines anderen, diese Funktion übernehmenden Programmteils für die Vorderachse und die Hinterachse durchgeführt wird.

30. Elektronisches Bremssystem nach Anspruch 20, **dadurch gekennzeichnet, dass** das Aussteuern des Bremsdrucks durch Takten von Einlass- und Auslassventilen der Radbremsventile erfolgt.

31. Elektronisches Bremssystem nach Anspruch 30, **dadurch gekennzeichnet, dass** die Taktung der Einlass- und der Auslassventile der Radbremsventile in Intervallen im Bereich von Millisekunden erfolgt.

32. Elektronisches Bremssystem nach Anspruch 31, **dadurch gekennzeichnet, dass** die Intervalle im Bereich zwischen 50 ms und 100 ms liegen.

33. Elektronisches Bremssystem nach Anspruch 30 oder 31, **dadurch gekennzeichnet, dass** die Taktung der Einlass- und der Auslassventile der Radbremsventile mittels einer Kombination von längeren und kürzeren Taktzeiten in Abhängigkeit von noch verbleibenden erforderlichen Druckänderungen durchgeführt wird.

34. Elektronisches Bremssystem nach Anspruch 20, **dadurch gekennzeichnet, dass** die Taktung der Radbremsventile in Übereinstimmung mit in einem elektronischen Steuergerät hinterlegten und/oder gelernten Kennlinien erfolgt.

35. Elektronisches Bremssystem nach Anspruch 20, **dadurch gekennzeichnet, dass** die Berechnung und die Steuerung des Bremsdrucks für jeden von Kanälen des Druckluft-Bremssystems durchgeführt wird.

36. Elektronisches Bremssystem nach Anspruch 20, **dadurch gekennzeichnet, dass** die Berechnung der Öffnungszeiten der Radbremsventile auf der Grundlage eines bekannten Vorratsdrucks des Druckluft-Bremssystems zur Erzielung der berechneten Druckverteilung für jeden von Kanälen des Bremssystems durchgeführt wird.

## Claims

1. Method for control of the braking pressure in an electronic brake system for a pneumatic brake system including a skid-control system in a commercial vehicle, **characterised by** the following steps:
(a) detection of a deceleration demand of the driver of the commercial vehicle (S21);
(b) computation of an overall impression for a front axle and a rear axle of the commercial vehicle (S22);
(c) computation of a distribution of pressures for the front axle and the rear axle (S23);
(d) computation of opening times of wheel braking valves (S24);
(e) modulation of the braking pressure by clocking the inlet and outlet valves of said wheel braking valves (S25);
(f) establishing and comparing the wheel slip on the front axle and on the rear axle (S26); and
(g) performance of the steps (e) and (f) until equality of wheel slip at the front axle and the rear axle has been established in step (f).

2. Method according to Claim 1, **characterised by** the following steps:
(h) establishing the actually achieved deceleration and comparing it against a desired deceleration; and
(i) performing the steps (a) to (g) until equality of the actually achieved deceleration and the desired deceleration is established in step (h).

3. Method according to Claim 1, **characterised in that** in step (f) the establishment of wheel skidding is carried out in intervals of 10 ms approximately.

4. Method according to Claim 1, **characterised in that** the control of the braking pressure is carried out for both the commercial vehicle and a trailer if the tractor vehicle and the trailer are provided with an electronic brake system.

5. Method according to Claim 1, **characterised in that** the control of the braking pressure is carried out only for the commercial vehicle whereas the braking pressure for a trailer of the commercial vehicle is controlled with feedback on the basis of pressure sensors of the commercial vehicle is provided with an electronic brake system whereas the trailer is not equipped with such a system.

6. Method according to Claim 1, **characterised in that** the control of the braking pressure is carried out on the axles of the commercial vehicle and/or a trailer of the latter, which do not comprise a pressure sensor, and **in that** modulation of the braking pressure is carried out on the axles of the commercial vehicle, on which pressure sensors are installed.

7. Method according to Claim 1, **characterised in that** the control of the braking pressure is carried out on the wheels of the commercial vehicle and/or a trailer of the latter, which do not comprise a pressure sensor, and **in that** a modulation of the braking pressure is carried out on the wheels of the commercial vehicle, on which modulation of the braking pressure is performed.

8. Method according to any of the Claims 6 or 7, **characterised in that** the modulation of the braking pressure is carried out on the axles or the wheels of the commercial vehicle or the trailer, which are not provided with a pressure sensor, with priority relative to the control of the braking pressure, in such a way that the axles or wheels without pressure sensors are tracked relative to the axles or wheels with pressure sensors.

9. Method according to Claim 1, **characterised in that** the computation of an overall impression for a front axle or a rear axle of the commercial vehicle in step (b) is carried out in conformity with the deceleration demand of the driver and the values established for the mass and the load of the commercial vehicle as well as with knowledge of the brake system of the commercial vehicle, this knowledge including the knowledge of a braking factor, of the size of the brake cylinder, of the size of the brakes, an information relating to the brake lines and similar parameters.

10. Method according to Claim 1, **characterised in that** the computation of a distribution of the pressure for the front axle and the rear axle in step (c) is carried out in conformity with a computation of the slip of the anti-skid brake system or another programme segment assuming this function, for the front axle and the rear axle.

11. Method according to Claim 1, **characterised in that** the modulation of the braking pressure in step (e) is carried out by clocking the inlet and outlet valves of wheel braking valves.

12. Method according to Claim 11, **characterised in that** the clocking of the inlet and outlet valves of wheel braking valves in step (e) is carried out in intervals within the range of milliseconds.

13. Method according to Claim 12, **characterised in that** the intervals are within the range between 50 ms and 100 ms.

14. Method according to Claim 11 or 12, **characterised in that** the clocking of the inlet and outlet valves of wheel braking valves in step (e) is carried out by means of a combination of longer and shorter cycle times as a function of required pressure variations still remaining.

15. Method according to Claim 1, **characterised in that** the clocking of wheel braking valves in step (e) is carried out in conformity with characteristics stored and/or learnt in an electronic controller.

16. Method according to Claim 1, **characterised in that** the computation and the control of the braking pressure are carried out for each of the ducts of the pneumatic brake system.

17. Method according to Claim 1, **characterised in that** the computation of opening times of wheel braking valves in step (d) is carried out on the basis of a known reservoir pressure of the pneumatic brake system so as to achieve the distribution of pressures as computed in step (c) for each of the ducts of the brake system.

18. Method according to any of the preceding Claims, **characterised in that** it comprises wheel modules at least partly without pressure sensors and controls a braking pressure on the wheel modules without pressure sensors on the basis of the wheel slip established by a an anti-skid brake system.

19. Method according to Claim 18, **characterised by** an electronic controller comprising an electronic braking module for the modulation of the braking pressure on the wheel modules with pressure sensors and for the control of the braking pressure on the wheel modules without pressure sensors of the commercial vehicle, as well as a trailer control module for the modulation of the braking pressure on the wheel modules with pressure sensors and for the control of the braking pressure on the wheel modules without pressure sensors of a trailer of the commercial vehicle.

20. Electronic brake system for a brake system without pressure sensors, at least in part, which encompasses an anti-skid brake system in a commercial vehicle, **characterised by**:
- a means for detection of a deceleration demand of the driver of the commercial vehicle;
- a means for computation of an overall impression for a front axle and a rear axle of the commercial vehicle;
- a means for computation of a pressure distribution for the front axle and the rear axle;
- a means for computation of opening times of wheel braking valves;
- a means for regulating the braking pressure;
- a means for establishing and comparing the skidding of a wheel on the front axle and on the rear axle; and
- a means for regulating the braking pressure, for establishing and comparing the wheel skidding on the front axle and on the rear axle until equality of skidding on the front axle and the rear axle is established in step (f).

21. Electronic brake system according to Claim 20, **characterised by**:
- a means for establishing the actually achieved deceleration and for comparing same against a desired deceleration; and
- a means for establishing equality of the actually achieved deceleration with the desired deceleration.

22. Electronic brake system according to Claim 20, **characterised in that** the establishment of wheel skidding is carried out in intervals of 10 ms approximately.

23. Electronic brake system according to Claim 20, **characterised in that** the control of the braking pressure is carried out for both the commercial vehicle and a trailer of the commercial vehicle if both the tractor vehicle and the trailer are provided with an electronic brake system.

24. Electronic brake system according to Claim 20, **characterised in that** the control of the braking pressure, at least partly without pressure sensors, is carried out for the commercial vehicle whilst a modulation of the braking pressure on the basis of pressure sensors is carried out for a trailer of the commercial vehicle if the commercial vehicle is provided with an electronic brake system and the trailer is not provided with such a system.

25. Electronic brake system according to Claim 20, **characterised in that** the control of the braking pressure is carried out on the axles of the commercial vehicle and/or the trailer of the latter, which are not provided with pressure sensors, whereas a modulation of the braking pressure is carried out on those axles of the commercial vehicle on which pressure sensors are installed.

26. Electronic brake system according to Claim 20, **characterised in that** the control of the braking pressure is carried out on the wheels of the commercial vehicle and/or of the trailer of the latter, which are not provided with pressure sensors, whilst a modulation of the braking pressure is carried out on those axles of the commercial vehicle on which pressure sensors are installed.

27. Electronic brake system according to any of the Claims 25 or 26, **characterised in that** the modulation of the braking pressure is carried out on the axles or wheels without pressure sensors of the commercial vehicle or the trailer with priority relative to the control of the braking pressure, in such a way that the axles or wheels without pressure sensors are tracked relative to the axles or wheels with pressure sensors.

28. Electronic brake system according to Claim 20, **characterised in that** the computation of an overall impression for a front axle or a rear axle of the commercial vehicle is carried out in conformity with the deceleration demand of the driver and the values established for the mass and the charge of the commercial vehicle as well as with knowledge of the brake system of the commercial vehicle, this knowledge encompassing the knowledge of a braking factor, the size of the brake cylinder, the size of the brakes, the information relating to the braking lines and similar parameters.

29. Electronic brake system according to Claim 20, **characterised in that** the computation of a distribution of the pressure for the front axle and the rear axle is carried out in conformity with a computation of the slip of the anti-skid brake system or another program segment performing this function, for the front axle and the rear axle.

30. Electronic brake system according to Claim 20, **characterised in that** the modulation of the braking pressure is carried out by clocking the inlet and outlet valves of wheel braking valves.

31. Electronic brake system according to Claim 30, **characterised in that** the synchronisation of inlet and outlet valves of wheel braking valves is carried out in intervals within the range of milliseconds.

32. Electronic brake system according to Claim 31, **characterised in that** the intervals are within the range from 50 to 100 ms.

33. Electronic brake system according to Claim 30 or 31, **characterised in that** the synchronisation of inlet and outlet valves of wheel braking valves is carried out by means of a combination of longer and shorter cycle times as a function of required pressure variations still remaining.

34. Electronic brake system according to Claim 20, **characterised in that** the synchronisation of wheel braking valves is carried out in conformity with characteristics stored and/or learnt in an electronic controller.

35. Electronic brake system according to Claim 20, **characterised in that** the computation and the control of the braking pressure is carried out for each of the ducts in the pneumatic brake system.

36. Electronic brake system according to Claim 20, **characterised in that** the computation of opening times of wheel braking valves is carried out on the basis of a known reservoir pressure of the pneumatic brake system so as to achieve the distribution of pressures as computed for each of the ducts of the brake system.

## Revendications

1. Procédé de commande de la pression de freinage dans un système électronique de freinage pour un système de freinage pneumatique renfermant un système d'antiblocage dans un véhicule utilitaire, **caractérisé par** les étapes suivantes :
a) détection d'une demande de décélération du conducteur du véhicule utilitaire (S21) ;
b) calcul d'une impression globale pour un essieu avant et un essieu arrière du véhicule utilitaire (S22) ;
c) calcul d'une distribution des pressions pour l'essieu avant et l'essieu arrière (S23) ;
d) calcul des temps d'ouverture des soupapes de freinage de roue (S24) ;
e) réglage de la pression de freinage par synchronisation des soupapes d'entrée et de sortie desdites soupapes de freinage de roue (S25) ;
f) établissement et comparaison du patinage des roues à l'essieu avant et à l'essieu arrière (S26) ; et
g) réalisation des étapes (e) et (f) jusqu'à l'établissement de l'égalité du patinage à l'essieu avant et l'essieu arrière dans l'étape (f).

2. Procédé selon la revendication 1, **caractérisé par** les étapes suivantes :
h) établissement de la décélération réelle achevée et sa comparaison avec une décélération de consigne ; et
i) réalisation des étapes (a) à (g) jusqu'à ce que l'égalité de la décélération réelle achevée et la décélération de consigne est établie dans l'étape (h).

3. Procédé selon la revendication 1, **caractérisé en ce qu'**en l'étape (f) l'établissement du patinage des roues se fait dans des intervalles de 10 ms environ.

4. Procédé selon la revendication 1, **caractérisé en ce que** la commande de la pression de freinage est réalisée non seulement pour le véhicule utilitaire mais aussi pour une remorque du véhicule utilitaire, si le véhicule tracteur et la remorque sont pourvu d'un système électronique de freinage.

5. Procédé selon la revendication 1, **caractérisé en ce que** la commande de la pression de freinage est réalisée seulement pour le véhicule utilitaire pendant que la pression de freinage pour une remorque du véhicule utilitaire est réglée sur la base des capteurs de pression si le véhicule utilitaire est équipé d'un système électronique de freinage pendant que la remorque ne comprend pas un tel système.

6. Procédé selon la revendication 1, **caractérisé en ce que** la commande de la pression de freinage est réalisée aux essieux du véhicule utilitaire et/ou d'une remorque du dernier, qui ne comprennent pas un capteur de pression, et **en ce qu'**un réglage de la pression de freinage est réalisé aux essieux du véhicule utilitaire, auxquels des capteurs de pression sont disposés.

7. Procédé selon la revendication 1, **caractérisé en ce que** la commande de la pression de freinage est réalisée aux roues du véhicule utilitaire et/ou d'une remorque du dernier, qui ne comprennent pas un capteur de pression, et **en ce qu'**un réglage de la pression de freinage est réalisé aux roues du véhicule utilitaire, auxquels un réglage de la pression de freinage est réalisé.

8. Procédé selon une quelconque des revendications 6 ou 7, **caractérisé en ce que** le réglage de la pression de freinage est réalisée aux essieux ou roues du véhicule utilitaire ou de la remorque, qui ne comprennent pas un capteur de pression, à priorité relative à la commande de la pression de freinage d'une telle façon, que les essieux ou roues sans capteurs de pression soient asservis relativement aux essieux ou roues avec des capteurs de pression.

9. Procédé selon la revendication 1, **caractérisé en ce que** la calcul d'une impression globale pour un essieu avant ou un essieu arrière du véhicule utilitaire dans l'étape (b) est réalisé en concordance avec la demande de décélération du conducteur et les valeurs établies de la masse et la charge du véhicule utilitaire ainsi qu'en connaissance du système de freinage du véhicule utilitaire, cette connaissance renfermant la connaissance d'un facteur de freinage, des dimensions du cylindre de frein, des dimensions des freins, de l'information concernant les canalisations de freinage et des paramètres similaires.

10. Procédé selon la revendication 1, **caractérisé en ce que** le calcul d'une distribution de la pression pour l'essieu avant et l'essieu arrière dans l'étape (c) est réalisé en concordance avec un calcul du patinage du système de freinage antiblocage ou d'un autre segment de programme, qui prend en charge cette fonction, pour l'essieu avant et l'essieu arrière.

11. Procédé selon la revendication 1, **caractérisé en ce que** le réglage de la pression de freinage dans l'étape (e) se fait par synchronisation des soupapes d'entrée et de sortie des soupapes de freinage de roue.

12. Procédé selon la revendication 11, **caractérisé en ce que** la synchronisation des soupapes d'entrée et de sortie des soupapes de freinage de roue en l'étape (e) se réalise dans des intervalles au-dedans de la gamme de millisecondes.

13. Procédé selon la revendication 12, **caractérisé en ce que** les intervalles se trouvent au-dedans de la gamme entre 50 ms et 100 ms.

14. Procédé selon la revendication 11 ou 12, **caractérisé en ce que** la synchronisation des soupapes d'entrée et de sortie des soupapes de freinage de roue en l'étape (e) est réalisée moyennant une combinaison des temps de cycle plus longues et plus brefs en fonction des variations de pression requises, qui restent encore.

15. Procédé selon la revendication 1, **caractérisé en ce que** la synchronisation des soupapes de freinage de roue en l'étape (e) se fait en concordance avec des caractéristiques mémorisées et/ou apprises dans une unité de commande électronique.

16. Procédé selon la revendication 1, **caractérisé en ce que** le calcul et la commande de la pression de freinage sont réalisés pour chacune des canalisations du système de freinage pneumatique.

17. Procédé selon la revendication 1, **caractérisé en ce que** le calcul des temps d'ouverture des soupapes de freinage de roue en l'étape (d) est réalisé sur la base d'une pression de réservoir connue du système de freinage pneumatique afin d'achever la distribution des pressions calculée en l'étape (c) pour chacune des canalisations du système de freinage.

18. Procédé selon une quelconque des revendications précédentes, **caractérisé en ce qu'**il comprend des modules de roue sans capteurs de pression, au moins en partie, et règle une pression de freinage aux modules de roue sans capteurs de pression sur la base d'un patinage de roue établi par un système de freinage autoblocage.

19. Procédé selon la revendication 18, **caractérisé par** une unité électronique de commande, qui comprend un module de freinage électronique pour le réglage de la pression de freinage aux modules de roue avec capteurs de pression et pour la commande de la pression de freinage aux modules de roue sans capteurs de pression du véhicule utilitaire, ainsi qu'un module de commande de remorque pour le réglage de la pression de freinage aux modules de roue avec capteurs de pression et pour la commande de la pression de freinage aux modules de roue sans capteurs de pression d'une remorque du véhicule utilitaire.

20. Système électronique de freinage pour un système de freinage sans capteurs de pression, au moins en partie, qui renferme un système de freinage autoblocage dans un véhicule utilitaire, **caractérisé par** :
- un moyen à détecter une demande de décélération du conducteur du véhicule utilitaire ;
- un moyen à calculer une impression globale pour un essieu avant et un essieu arrière du véhicule utilitaire ;
- un moyen à calculer une distribution de la pression pour l'essieu avant et l'essieu arrière ;
- un moyen à calculer des temps d'ouverture des soupapes de freinage de roue ;
- un moyen à régler la pression de freinage ;
- un moyen à établir et comparer le patinage d'une roue à l'essieu avant et à l'essieu arrière ; et
- un moyen à régler la pression de freinage, à établir et comparer le patinage des roues à l'essieu avant et à l'essieu arrière jusqu'à ce l'égalité du patinage à l'essieu avant et l'essieu arrière dans l'étape (f) est établie.

21. Système électronique de freinage selon la revendication 20, **caractérisé par** :
- un moyen à établir la décélération réelle achevée et a la comparer avec une décélération de consigne ; et
- un moyen à établir l'égalité de la décélération réelle achevée avec la décélération de consigne.

22. Système électronique de freinage selon la revendication 20, **caractérisé en ce que** l'établissement du patinage des roues est réalisé dans des intervalles de 10 ms environ.

23. Système électronique de freinage selon la revendication 20, **caractérisé en ce que** la commande de la pression de freinage est réalisée non seulement pour le véhicule utilitaire mais aussi pour une remorque du véhicule utilitaire si tous les deux, le véhicule tracteur et la remorque, comprennent un système électronique de freinage.

24. Système électronique de freinage selon la revendication 20, **caractérisé en ce que** la commande de la pression de freinage, au moins en partie sans capteurs de pression, est réalisé seulement pour le véhicule utilitaire, pendant qu'un réglage de la pression de freinage sur la base des capteurs de pression est réalisé pour une remorque du véhicule utilitaire, si le véhicule utilitaire est équipé d'un système électronique de freinage et la remorque ne comprend pas un tel système.

25. Système électronique de freinage selon la revendication 20, **caractérisé en ce que** la commande de la pression de freinage est réalisée aux essieux du véhicule utilitaire et/ou de la remorque du dernier, qui ne sont pas équipés des capteurs de pression, pendant un réglage de la pression de freinage est réalisé aux essieux du véhicule utilitaire, auxquels des capteurs de pression sont installés.

26. Système électronique de freinage selon la revendication 20, **caractérisé en ce que** la commande de la pression de freinage est réalisé aux roues du véhicule utilitaire et/ou d'une remorque du dernier, qui ne sont pas munies des capteurs de pression, pendant un réglage de la pression de freinage est réalisé aux essieux du véhicule utilitaire, auxquels des capteurs de pression sont installés.

27. Système électronique de freinage selon une quelconque des revendications 25 ou 26, **caractérisé en ce que** le réglage de la pression de freinage est réalisé aux essieux ou roues sans capteurs de pression du véhicule utilitaire ou de la remorque de façon si prioritaire, relativement à la commande de la pression de freinage, que les essieux ou roues sans capteurs de pression soient asservis aux essieux ou roues avec capteurs de pression.

28. Système électronique de freinage selon la revendication 20, **caractérisé en ce que** le calcul d'une impression globale pour un essieu avant ou un essieu arrière du véhicule utilitaire est réalisé en concordance avec la demande de décélération du conducteur et les valeurs établies de la masse et la charge du véhicule utilitaire ainsi qu'en connaissance du système de freinage du véhicule utilitaire, cette connaissance renfermant la connaissance d'un facteur de freinage, des dimensions du cylindre de frein, des dimensions des freins, de l'information concernant les canalisations de freinage et des paramètres similaires.

29. Système électronique de freinage selon la revendication 20, **caractérisé en ce que** le calcul d'une distribution de la pression pour l'essieu avant et l'essieu arrière est réalisé en concordance avec un calcul du patinage du système de freinage antiblocage ou d'un autre segment de programme, qui prend en charge cette fonction, pour l'essieu avant et l'essieu arrière.

30. Système électronique de freinage selon la revendication 20, **caractérisé en ce que** le réglage de la pression de freinage se fait par synchronisation des soupapes d'entrée et de sortie des soupapes de freinage de roue.

31. Système électronique de freinage selon la revendication 30, **caractérisé en ce que** la synchronisation des soupapes d'entrée et de sortie des soupapes de freinage de roue se réalise dans des intervalles au-dedans de la gamme de millisecondes.

32. Système électronique de freinage selon la revendication 31, **caractérisé en ce que** les intervalles se trouvent au-dedans de la gamme entre 50 ms et 100 ms.

33. Système électronique de freinage selon la revendication 30 ou 31, **caractérisé en ce que** la synchronisation des soupapes d'entrée et de sortie des soupapes de freinage de roue est réalisée moyennant une combinaison des temps de cycle plus longues et plus brefs en fonction des variations de pression requises, qui restent encore.

34. Système électronique de freinage selon la revendication 20, **caractérisé en ce que** la synchronisation des soupapes de freinage de roue se fait en concordance avec des caractéristiques mémorisées et/ou apprises dans une unité de commande électronique.

35. Système électronique de freinage selon la revendication 20, **caractérisé en ce que** le calcul et la commande de la pression de freinage sont réalisés pour chacune des canalisations du système de freinage pneumatique.

36. Système électronique de freinage selon la revendication 20, **caractérisé en ce que** le calcul des temps d'ouverture des soupapes de freinage de roue est réalisé sur la base d'une pression de réservoir connue du système de freinage pneumatique afin d'achever la distribution des pressions calculée pour chacune des canalisations du système de freinage.
